# EUROPEAN PATENT APPLICATION

(11) **EP 4 350 096 A1**
(43) Date of publication of application: **10.04.2024**
(21) Application number: 23201576.8
(22) Date of filing: 04.10.2023
(51) Int. Cl.: E04B 1/41, E04G 21/18

(54) **CAST IN PLACE METAL ACTUATED DECK INSERT**

(30) Priority: 07.10.2022 US 202217938720
(71) Applicant: Black & Decker, Inc., New Britain, CT 06053 (US)
(72) Inventor: DUNNING, Jack, White Plains, NY 10605 (US)
(74) Representative: SBD IPAdmin

(57) **Abstract**

A cast-in-place concrete anchor assembly for installation in or on a metal decking form. The assembly incudes an anchor housing with shaft extending from a flange. The flange includes a locking member that may take the form of a female thread. The anchor assembly also including an anchor support for receiving a shaft of the anchor housing. The anchor support further includes a radial expansion member with a tapered surface. The radial expansion member flexes outward upon engagement of the tapered surface by the shaft to expend the expansion member. The expansion member expanding outwardly past an outermost radius of a hole in the metal decking to lockably and selectively connect the assembly to the metal decking.

## Description

### BACKGROUND

Cast-in-place (CIP) anchors are used to connect external loads to concrete structures. The anchor is connected (e.g., by encasement) securely to a concrete structure of a building (e.g., a concrete wall, concrete slab, concrete floor, column, etc.) and a load is connected (e.g., by suspension) to the anchor. For example, an anchor may be secured to a second-floor slab that serves as the roof of the first floor of a building. The anchor is secured to a lower portion of the slab and may include a connector positioned or located at or in proximity to the lower boundary of the slab. The connector may be a female thread for receiving a threaded rod on which the external load may be supported. Therefore, from the first floor below the slab, the threaded rod may be inserted or installed up into the female thread and utilities such as mechanical, electrical, or plumbing equipment may be supported (e.g., suspended) from the second-floor slab.

Cast-in-place anchors are placed/positioned within the concrete form work before pouring of the concrete. Concrete is then poured over/around the anchors and the anchors encased in the concrete. The load connector of the anchor (e.g., female thread) is positioned adjacent the concrete form boundary so that after concrete curing, the connector is readily accessible at or near the concrete boundary (e.g., after form work is removed).

In the case of a slab poured using metal decking, the metal decking is laid out horizontally and sufficiently supported thereunder before receiving the concrete pour. A hole is made (e.g., drilled) in a lower floor of the metal decking. An anchor assembly including an anchor housing and an anchor support is then positioned (e.g. by insertion) in the hole with a connector (e.g., female thread) directed at or passing through the hole. Concrete is then poured onto the decking encasing the anchor and fixing its position such that the female thread is readily exposed at or near the slab boundary.

Usually, a metal decking CIP anchor includes a metal anchor housing and a plastic anchor support. The anchor support includes a deck flange for engaging a top surface of the metal decking around the hole in the decking and the deck flange may be secured to the decking (e.g., by screws). The portion of the anchor/anchor support that passes through the decking to the lower side of the decking may include an expansion member that collapses as it is passed through the hole and then automatically re-expands radially after passing through the hole. That radial expansion of the expansion member secures the anchor to the metal decking along with the screws to prevent the anchor from being accidentally removed or dislodged from hole during construction.

In conventional anchors, the expansion of the above mentioned expansion member is automatic and such expansion is not selectable or reversable. Therefore, after pushing a conventional anchor through the decking hole and expanding the expansion member, it is difficult to remove the anchor from the hole should a change in position of the anchor be desired. A worker may have to spend precious time going to the lower floor to gain access to engage the expanded expansion member in order to remove it. Furthermore, if many anchors are already installed in the metal decking it would not necessarily be easy to determine precisely from the underside of the decking which anchor needs removal.

It would be beneficial to develop an anchor system in which the anchor could be adequately secured to the metal decking from the opposite side of the decking while at the same time the opposite side securement be selectively activated and reversible. Specifically, it would be beneficial if the opposite side expansion member could be selectively reversed so that the anchor could be easily removed should repositioning of the anchor on the metal decking be necessary or desired.

### SUMMARY

The present application discloses a cast-in-place concrete anchor assembly connectable to a hole in concrete metal decking. When encased in concrete, the assembly may support an external load from the concrete structure. The assembly may include an anchor housing and an anchor support. The anchor housing may include an external load bearing flange (for encasement in concrete) and a shaft extending therefrom. The shaft including a connection member from which an external load may be connected to the cast-in-place concrete anchor. The anchor support may include a receptacle for telescopically receive the anchor housing therein and the anchor support may include a deck support flange and a radial expansion member. Actuation of the radial expansion member occurring as a result of the shaft of the anchor housing engaging the expansion member during the telescopic receiving to lock the assembly to the hole by trapping the hole between the base support flange and the expansion member.

The present application further discloses a method of installing a cast-in-place anchor in a hole in concrete metal decking for supporting an external load from a concrete structure formed on the metal decking. The method includes the step of providing an anchor housing. The anchor housing includes a load bearing flange and a shaft extending from the flange. The anchor housing further including a connection member in or on the shaft from which the external load may be connected to the cast-in-place concrete anchor. The method also includes the step of providing an anchor support. The anchor support includes a flange and a radially expandable member. The method further includes the step of telescopically inserting the anchor housing into the anchor support and into engagement with the radially expandable member until the radially expandable member is radially expanded to be larger than a radius of the hole.

### BRIEF DESCRIPTION OF THE DRAWINGS

Fig. 1A shows a top perspective view of a first embodiment of an anchor support installed in metal decking.
Fig. 1B shows a bottom perspective view of the anchor assembly of Fig. 1A installed in the metal decking.
Fig. 1C shows a top perspective view of a first embodiment of the anchor support of Fig. 1A.
Fig. 1D shows a first side view of the anchor support of Fig. 1A.
Fig. 1E shows a second side view of the anchor support of Fig. 1A.
Fig. 1F shows a top view of the anchor support of Fig. 1A.
Fig. 1G shows a bottom view of the anchor support of Fig. 1A.
Fig. 1H shows a side cross-sectional view of an anchor housing installed in the anchor support of Fig. 1A in an unexpanded configuration.
Fig. 11 shows a side cross-sectional view of an anchor housing installed in the anchor support of Fig. 1A in an expanded configuration.

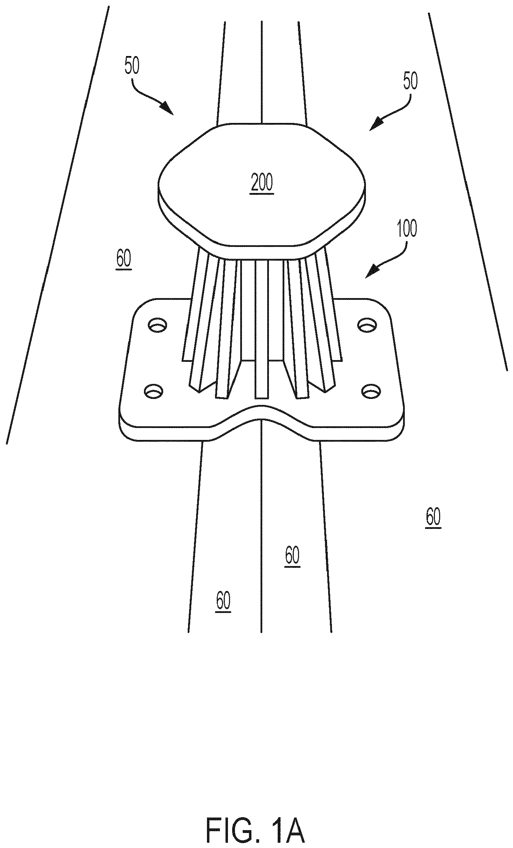

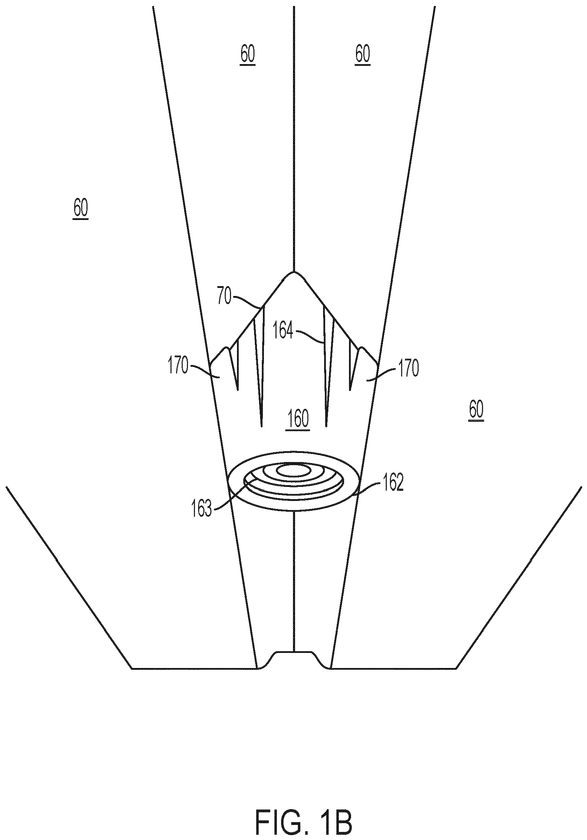

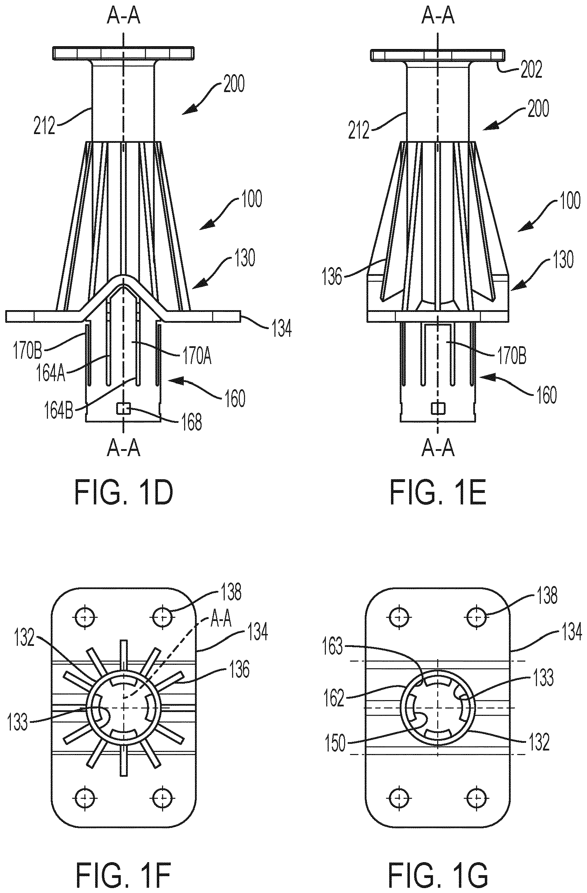

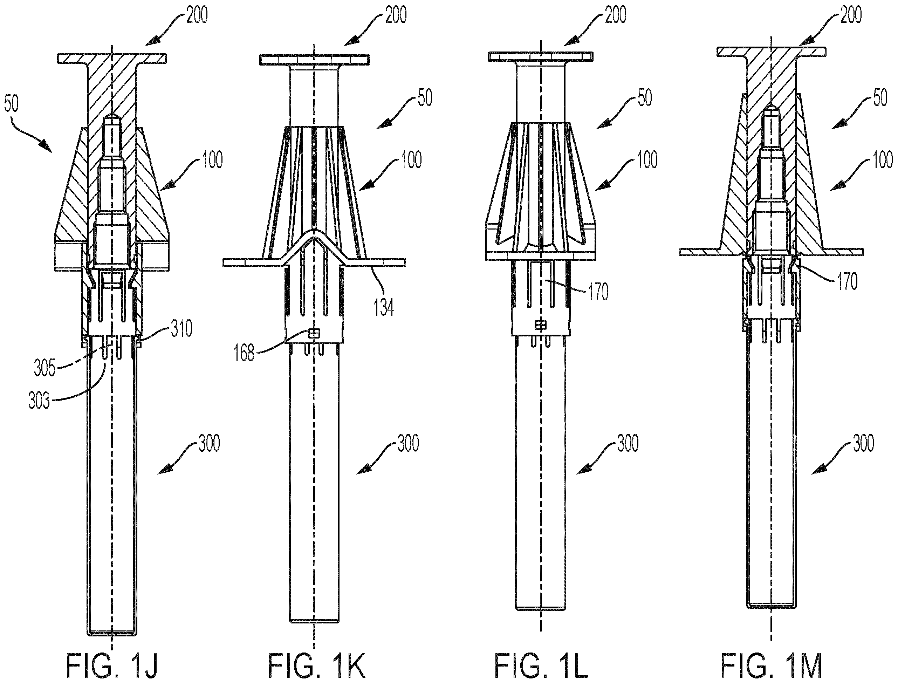

Fig. 1J shows a first side view in partial cross-section of an anchor assembly including the anchor support of Fig. 1A, the anchor housing of Fig. 1B and an extension passage.
Fig. 1K shows a first side view of an anchor assembly including the anchor support of Fig. 1A, the anchor housing of Fig. 1B and an extension passage.
Fig. 1L shows a second side view of an anchor assembly including the anchor support of Fig. 1A, the anchor housing of Fig. 1B and an extension passage.
Fig. 1M shows a second side view in partial cross-section of an anchor assembly including the anchor support of Fig. 1A, the anchor housing of Fig. 1B and an extension passage.

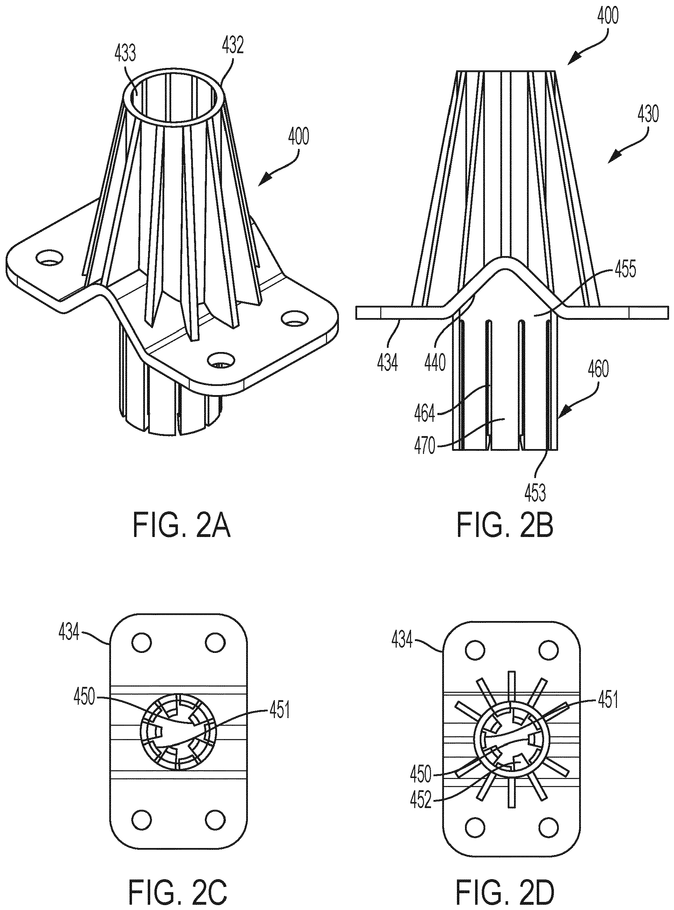

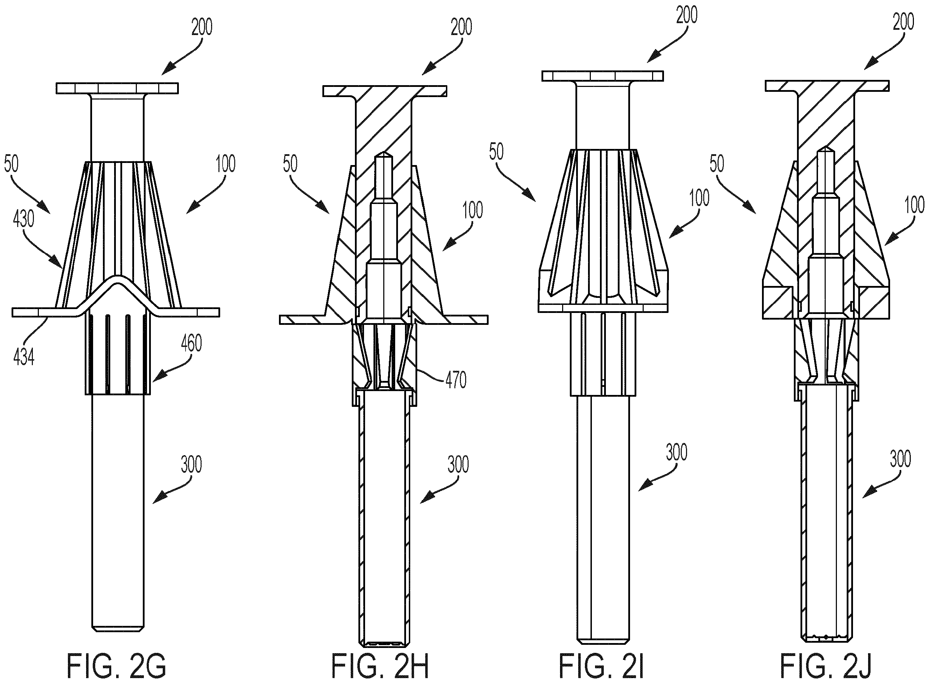

Fig. 2A shows a top perspective view of a second embodiment of an anchor support.
Fig. 2B shows a side view of the anchor support of Fig. 2A.
Fig. 2C shows a bottom view of the anchor support of Fig. 2A.
Fig. 2D shows a top view of the anchor support of Fig. 2A.

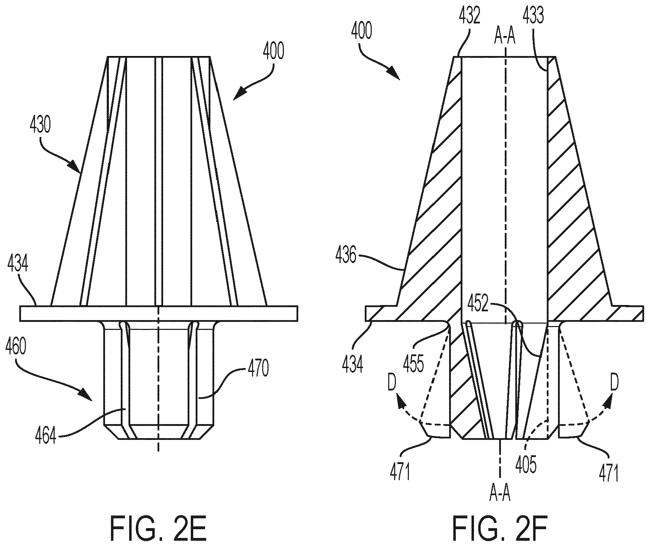

Fig. 2E shows a side view of the anchor support of Fig. 2A.
Fig. 2F shows a side cross-sectional side view of the anchor support of Fig. 2A.
Fig. 2G shows a first side view of an anchor assembly including the anchor support of Fig. 2A, the anchor housing of Fig. 1B and an extension passage.
Fig. 2H shows a partial cross-section of the anchor assembly of Fig. 2G.
Fig. 2I shows a second side view of an anchor assembly including the anchor support of Fig. 1A, the anchor housing of Fig. 1B and an extension passage.

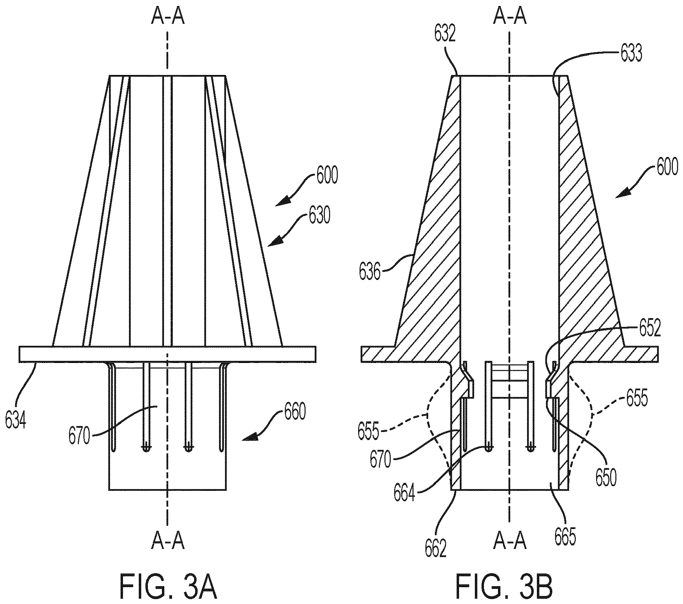

Fig. 3A shows a side view of a third embodiment of an anchor support.
Fig. 3B shows a cross sectional view of the anchor support of Fig. 3A.

### DETAILED DESCRIPTION

Figs. 1A-1M show a first embodiment of an inventive anchor assembly **50** including an anchor support **100,** an anchor housing **200** and a passage extension **300.** In particular, Fig. 1A shows a top perspective view of the anchor assembly **50** installed on a top surface of concrete slab metal decking **60.** Specifically, an anchor **100** is shown having received an anchor housing **200** therein. Furthermore, Fig. 1B shows a lower perspective view of a bottom portion **160** of anchor support **100** as it has been passed through an opening or hole **70** in metal decking **60.** The presence of lower portion **160** on the lower side of metal decking **60** also presents an inside surface **163** of lower portion **160** which may include a locking member such as a female thread.

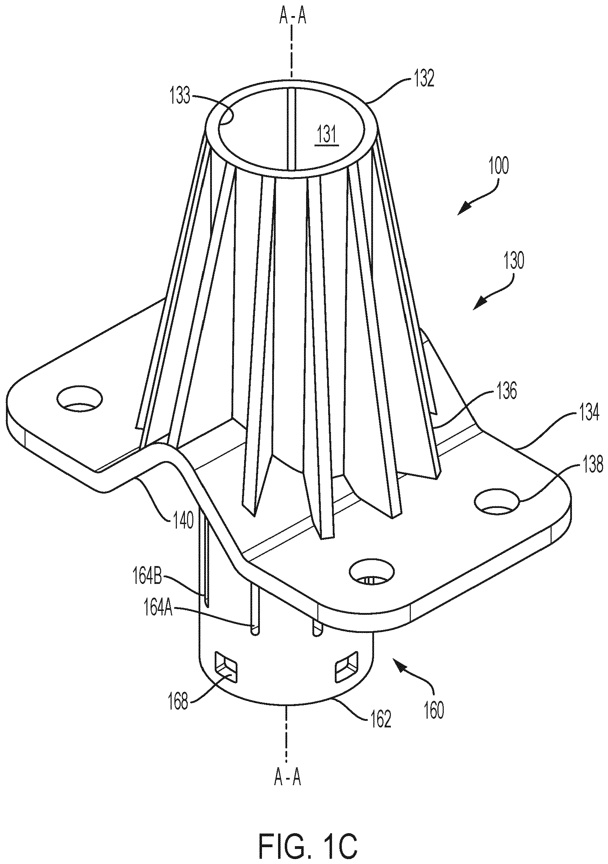

Fig. 1C is a top perspective view of the anchor support **100.** Anchor support **100** may be made from plastic or other relatively inexpensive moldable material. As mentioned above, anchor support **100** may include an upper portion **130** and a lower portion **160.** A flange **134** is disposed between the upper portion **130** and the lower portion **160.** A longitudinal center line A-A passes through a longitudinal center of anchor assembly **50,** anchor housing **200** and anchor support **100.** Upper portion **130** includes a wall **132** which defines a receptacle **133.** Upper portion **130** may also include one or more support ribs **136** for connected to and between wall **132** and flange **134** to strengthen and maintain the relative position between wall **132** and flange **134** under any contrary load.

Flange **134** may include openings (e.g., through holes) in the longitudinal direction for securing the flange **134** to a top surface of metal decking **60.** Flange **134** may also include a shaped or non-planar portion **140** (e.g., shaped recess or shaped projection) for accommodating a correspondingly shaped or non-planar portion of the metal decking while allowing the remainder of flange **134** to rest on metal decking **60** in a plane generally perpendicular to longitudinal axis A-A. Shaped portion 140 may be shaped to accommodate a regularly occurring pattern in a particular decking design frequently encountered by an installer. For example, if a ridge exists in the sheeting to avoid bending or a ridge exists where tow sheets overlap, it may be desirable to have a flange **134** capable of accommodating the ridge should the anchor need to be placed in proximity to the ridge.

Lower portion **160** of anchor support **100** may also include a wall **162** and a recess **163** (see Fig. 1G). A radius of an outer portion of wall **162** is slightly smaller than a hole created in the metal decking through which lower portion **160** is inserted. Lower portion **160** may also include connectors **168** that may take the form of through holes or recesses. Through hole connectors may serve as receptacles for projections connected to other structures forming aspects of anchor assembly **50** (e.g., passage extensions) and described further below.

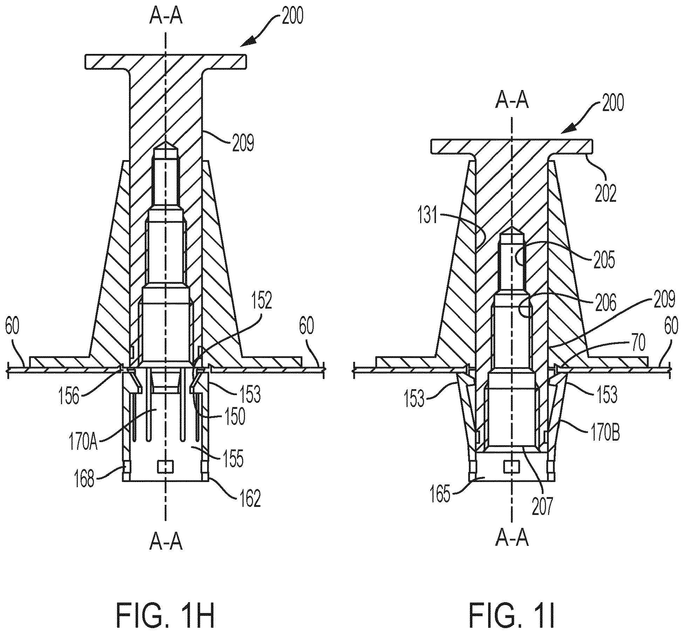

Lower portion **160** may also include a plurality of slots **164A, 164B,** defining a finger(s) **170A, 170B** therebetween (see Figs 1D, 1E and 1H). Fingers **170** may be cantilevered and include a free end **153** and a fixed end **155.** Free end **153** may be disposed at or along a longitudinal position between fixed end **155** and flange **134.** In other words, finger **170** may be formed from a part of wall **160** and extend from a fixed end **155** with a fee **153** end extending or projecting toward flange **134.** A free end **153** of finger **170** may include a tapered projection **150** thereon. Tapered projection **150** may include a taper surface **152** that extends toward a central axis A-A in a direction from free end **153** to fixed end **155.** A gap **156** between a tip of finger **170** and a lower portion of flange **134** is at least lightly larger than a thickness of metal decking **60.**

As mentioned above, upper portion **130** includes a receptacle **133.** Receptacle **133** defines an inner wall surface **131** around central axis A-A. Tapered surface **152** projects radially inward past inner wall surface **131** and toward central axis A-A. Figs. 1D and 1E show first and second side views of the anchor support of Fig. 1A now including an anchor housing **200** inserted into receptacle **133** of anchor support **100.** Anchor housing **200** may be made of metal or other high strength material capable of supporting significant external load attached to the slab to be formed. Anchor housing **200** also includes a well know flange **202** for transferring load from the external load to the concrete. As mentioned above, extending from flange **202** is a shaft **212** that includes a connection member **205, 206** (e.g., a female metal thread). An external surface **209** of shaft **212** may engage inner wall surface **131** of upper portion **130** of anchor support **100** (see Fig. 1I).

Anchor housing **200** and anchor support **100** may be connected by manipulable friction fit between surfaces **209** and **131** to avoid easy separation. This manipulable friction fit allows shaft **212** of anchor housing **200** to be inserted into upper portion **130,** through flange **134** and into recess **163** of lower portion **160.**

Figs. 1J - 1M show anchor assembly **50** including a passage extension **300.** Passage extension **300** may be tubular and is selectively connectable to a lower end **162** of lower portion **160.** Specifically, passage extension **300** may include connectors **310** (e.g., openings or projections) for selectively engaging with the other of openings or projections **168** of the lower portion **160** of anchor support **160.** The engagement of the openings of one with the projections of the other enable selective connection therebetween.

Fig. 1H and Fig. 1I show two respective configurations of anchor assembly **50** with anchor housing **200** installed in anchor support **100.** In a first configuration a lower portion of shaft **212** is inserted into anchor support **100,** but not so far in as to engage tapered surface **152.** In a second configuration, a lowermost portion of shaft **212** of anchor support **200** is inserted into anchor support **100** past flange **134** and into engagement with and past tapered surface **152.** The engagement of the lower end of shaft **212** with tapered surface **152** forces free end **153** of cantilevered finger **170** to flex radially outward away from central axis A-A. Specifically, as shown in Fig. 1I., the outermost portion of free end **150** of finger **170** flexes radially out past inner wall surface **131** and out past a radial extent of hole **70** in metal decking **60.** As a result, metal **60** decking becomes trapped between a tip of the free end **153** of finger **170** and a lower contact surface of flange **134.** Said another way, in the second configuration, shaft **212** forces fingers **170** sufficiently radially outward to lock anchor support **200** into and onto the hole in the decking.

In use, an installer identifies a location where an anchor assembly **50** is to be installed. The installer then creates a hole **70** at that location (e.g., by drilling). The installer then inserts lower portion **160** into hole **70** until lower surface **140** of flange **134** engages the upper surface of metal decking **60.** An anchor housing **200** may already be inserted into recess **133** as described in the first unactuated finger configuration above (see Fig. 1H). The anchor assembly **50** may then be reconfigured to the second configuration by urging (e.g., stepping on, stomping on, tapping with a hammer, etc.) shaft **212** of anchor housing **200** toward, against and past tapered portion **152** causing free ends **153** of fingers **170** to expand radially outward past a radial extend of hole **70** in the metal decking **60.** The installer may then check to see if assembly **50** is locked to the hole by tugging a little on anchor support **50.** To remove and reposition the anchor support, the installer need merely pull anchor housing **200** back out of anchor housing **100** to allow fingers **170** to flex back inward to a radial extend equal to or smaller than the hole.

Figs. 2A-2H show a second embodiment of an anchor support **400.** The second embodiment of an anchor support **400** of anchor assembly **50** is similar to the first and third embodiments in structure and reconfiguration and parts are mostly interchangeable. Reference numerals begin with "4" in the 400 hundred series, but the first two digits of the reference number align with numbers from the first embodiment where possible. Fig. 2A shows a top perspective view of a second embodiment of anchor support **400.** Fig. 2B shows a side view of the anchor support **400** of Fig. 2A. Figs. 2C and 2D show top and bottom views of the anchor support **400** of Fig. 2A. Fig, 2B show a plurality of slots **464** defining fingers **470.** An uppermost end **455** of fingers **470** is fixed and a lower most **453** is free so that finger **470** is cantilevered from fixed end **455.** A radially inner portion of lower end **453** includes a tapered portion **450** with a tapered surface **452.** Tapered surface **452** tapers toward a central longitudinal axis in a direction from fixed end **455** to free end **453.** In use, and similar to the reconfiguration described above in the first embodiment, an anchor housing **200** is inserted into the receptacle **435** until a lower portion of shaft **212** engages tapered surface(s) **452** forcing fingers **470** outward so that a radially outward extent of fingers **470** is radially outward of a radial extent of the metal decking hole through which lower portion **460** was passed. Fingers **470** flex outward in a direction **471** which is direction **D** in the drawings relative to an living hinge near flange **434.** Additional inward projections **451** may also be added to an inner receptacle surface **465.** Projections **451** may extend inward to engage shaft **212** (e.g., at a groove in shaft **212**) to indicate to a user during insertion of shaft **212** that a satisfactory extent of insertion has been achieved (e.g., insertion to the above-described full configuration or insertion to above-described second configuration).

Figs. 3A and 3B show a third embodiment of an anchor support **600.** The third embodiment of the anchor assembly **50** is similar to the first and second embodiment in structure and reconfiguration and parts are interchangeable. The exception is that fingers **670,** defined by slots **664** are attached at upper and lower ends. In other words, insertion of anchor housing **200** into receptacle **633** and down into engagement with tapered surface **652** of tapered projection **650** creates a radially outward bulge or buckling **655** of wall **662** such that a portion of finger **670** extends radially out past a radial extent of the hole in the metal decking. This radial expansion of the bulge prevents anchor support **600** from being removed after actuation into the second configuration. A threaded rod may now be inserted into passage **665** of anchor support **100.**

It will be appreciated that whilst various aspects and embodiments have heretofore been described the scope of the present invention is not limited thereto and instead extends to encompass all arrangements, and modifications and alterations thereto, which fall within the scope of the appended claims.

## Claims

1. A cast-in-place concrete anchor assembly connectable to a hole in concrete metal decking, the assembly for supporting an external load from a concrete structure, the assembly comprising:
an anchor housing, the anchor housing including a load bearing flange and a connection member from which an external load may be connected to the cast-in-place concrete anchor; an anchor support for telescopically receiving the anchor housing therein, the anchor support further including a bases support flange and a radial expansion member, actuation of the radial expansion member occurring as a result of the anchor housing engaging the expansion member during the telescopic receiving to lock the assembly to the hole by trap the hole between base support flange and the expansion member.

2. The cast-in-place concrete anchor assembly of claim 1 wherein the radial expansion member flexes by means of an elastic or flexible material.

3. The cast-in-place concrete anchor assembly of claim 1 or 2 wherein the anchor housing is made of metal, optionally wherein the anchor support is made of a non-metallic material such as plastic.

4. The cast-in-place concrete anchor assembly of any preceding claim wherein the anchor support includes at least one finger, the at least one finger being flexible radially outward in response to insertion of the anchor housing into the anchor support.

5. The cast-in-place concrete anchor assembly of claim 4 wherein the finger is cantilevered and has a fixed end and a free end and the anchor support urges the free end radially outward.

6. The cast-in-place concrete anchor assembly of any preceding claim wherein the expansion member includes a ramped surface that is inclined inward toward a central axis of the anchor, optionally wherein the incline toward the central axis is in a direction away from the flange.

7. A method of installing a cast-in-place anchor in a hole in concrete metal decking for supporting an external load from a concrete structure formed on the metal decking, the method comprising the steps of:
providing an anchor housing, the anchor housing including a load bearing flange and a connection member from which the external load may be connected to the cast-in-place concrete anchor; providing an anchor support, the anchor support including a radially expandable member;
telescopically inserting the anchor housing into the anchor support such that the anchor support engages the radially expandable member until the radially expandable member is radially expanded to be larger than a radius of the hole.

8. The method of claim 7 wherein the radially expandable member flexes by means of an elastic or flexible material.

9. The method of claim 7 or 8 wherein the anchor housing is made of metal, optionally wherein the anchor support is made of a non-metallic material such as plastic.

10. The method of any of claims 7 to 9 wherein the anchor support includes at least one finger, the at least one finger being flexible radially outward in response to insertion of the anchor housing into the anchor support.

11. The method of claim 10 wherein the finger is cantilevered and has a fixed end and a free end and the anchor support urges the free end radially outward.

12. The method of any of claims 7 to 11 wherein the expandable member includes a ramped surface that is inclined inward toward a central axis of the anchor, optionally wherein the incline toward the central axis is in a direction away from the flange.

13. A cast-in-place concrete anchor assembly for connection to a hole in metal decking for supporting an external load from a concrete structure, the anchor assembly comprising:
an anchor housing, the anchor housing including a flange and a connection member from which an external load may be connected to the cast-in-place concrete anchor; an anchor support for telescopically receiving and supporting the anchor housing and from which the external load may be connected; wherein
the anchor assembly including a first configuration in which the anchor housing is telescopically receiving the anchor support and the radial extent of the radial expansion member is less than a radius of the hole, the anchor assembly including a second configuration in which the anchor housing is telescopically received further into the anchor support than the first configuration such that the radial extent of the radial expansion member is larger than the radius of the hole.

14. The cast-in-place concrete anchor assembly of claim 13 wherein, the anchor housing is made of metal and the anchor support is made of plastic.
